# EUROPEAN PATENT APPLICATION

(11) **EP 3 761 607 A1**
(43) Date of publication of application: **06.01.2021**
(21) Application number: 19821754.9
(22) Date of filing: 03.06.2019
(51) Int. Cl.: H04L 29/08, H04L 12/24, H04L 29/06

(54) **VEHICLE-MOUNTED NETWORK SYSTEM AND COMMUNICATION METHOD THEREOF**

(30) Priority: 22.06.2018 CN 201810651632; 03.08.2018 CN 201810879199
(71) Applicant: CRRC Qingdao Sifang Rolling Stock Research Institute Co., Ltd., Qingdao, Shandong 266000 (CN)
(72) Inventor: XU, Yanfen, Qingdao, Shandong 266000 (CN); ZHU, Youlong, Qingdao, Shandong 266000 (CN); XU, Dongchao, Qingdao, Shandong 266000 (CN)
(74) Representative: J A Kemp LLP
(86) International application number: PCT/CN2019/089846
(87) International publication number: WO 2019/242492

(57) **Abstract**

The present application relates to an in-vehicle network system and a communication method thereof. The in-vehicle network system comprises in-vehicle signal system devices, TCMS devices, other in-vehicle network sub-system devices and two independent sub-networks, wherein the in-vehicle signal system devices directly access to a first sub-network A and a second sub-network B, respectively; according to safety levels, the TCMS devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces; and, the ordinary sub-system devices directly access to the second sub-network B and/or the first sub-network A. In the present application, the signal system network and the TCMS network are integrated into a same network, so that a complexity of the in-vehicle network system is reduced, and fault points of the system are reduced; the two sub-networks are hot standby s for each other, it can be ensured that normal operations of the in-vehicle network devices will not be affected when an unrecoverable fault occurs in one of the two sub-networks.

## Description

### TECHNICAL FIELD

The present application belongs to the technical field of network communication of railway vehicles, and particularly relates to an in-vehicle network system suitable for integrating a control system network and a signal system network of a train, and a communication method thereof.

### BACKGROUND ART

Conventional in-vehicle network systems usually consist of many networks of different service types, such as a signal system network for serving train dispatch and operation and a Train Control and Management System (referred to as TCMS for short) network for serving train control and maintenance management. Such in-vehicle network systems have the following problems:
1. due to the coexistence of multiple sets of systems, the network complexity is high and fault points are increased;
2. due to the coexistence of multiple sets of systems, the manufacturing cost of trains is increased, and the complexity of cabinet and cable deployment is improved; and
3. since the networks are isolated from each other, vehicle maintenance personnel are unable to realize unified maintenance and management, and the complexity and cost of maintenance and management are increased.

If the TCMS network and the signal system network are directly integrated into a same physical network, the network can be simplified. However, since there are sub-system devices with low safety level in the TCMS network, it is easy to cause risks and result in the uncontrollability of the signal system, bringing hidden dangers to operation safety of the train.

### SUMMARY

In view of the problems existed in the prior in-vehicle network systems, the present application provides an in-vehicle network system with low complexity, low cost and high safety, and a communication method thereof.

For this purpose, one aspect of the present application provides an in-vehicle network system, comprising in-vehicle signal system devices, TCMS devices, other in-vehicle network sub-system devices and two independent sub-networks, wherein the in-vehicle signal system devices directly access to a first sub-network A and a second sub-network B, respectively; according to safety levels, the TCMS devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces; and, the ordinary sub-system devices directly access to the second sub-network B and/or the first sub-network A.

In one aspect, preferably, the ordinary sub-system devices directly access to the first sub-network A or the second sub-network B.

Preferably, each of the ordinary sub-system devices is a device which has one communication interface and is not related to train operation and vehicle safety, and each of the ordinary sub-system devices accesses to the first sub-network A or the second sub-network B through the one communication interface.

Preferably, the ordinary sub-system device(s) in each carriage sends messages in the first sub-network A or the second sub-network B and sends identical messages to the key sub-system device(s) in this carriage; the key sub-system device(s) in this carriage forwards messages in the second sub-network B or the first sub-network A, as a hot standby of the ordinary sub-system device(s); and, a receiver determines to accept data in the first sub-network A or the second sub-network B according to network data and network state of the two sub-networks.

In another aspect, preferably, the ordinary sub-system devices directly access to the first sub-network A and the second sub-network B.

Preferably, each of the ordinary sub-system device is a device which has at least two communication interfaces and is not related to train operation and vehicle safety, and each of the ordinary sub-system devices accesses to the first sub-network A and the second sub-network B through two or more communication interfaces.

Preferably, the ordinary sub-system device(s) in each carriage sends messages simultaneously in the first sub-network A and the second sub-network B, and a receiver determines to accept data in the first sub-network A or the second sub-network B according to network data and network state of the two sub-networks.

Preferably, each of the key sub-system devices is a device which has at least two communication interfaces and is related to train operation and vehicle safety, and each of the key sub-system devices accesses to the two sub-networks through two or more communication interfaces.

Preferably, the key sub-system device(s) in each carriage sends messages simultaneously in the first sub-network A and the second sub-network B, and a receiver determines to accept data in the first sub-network A or the second sub-network B according to network data and network state of the two sub-networks.

Preferably, the in-vehicle signal system devices are in-vehicle devices each having at least two communication interfaces, and the in-vehicle signal system devices respectively access to the two sub-networks each through two or more communication interfaces.

Preferably, the in-vehicle signal system devices operate simultaneously in the first sub-network A and the second sub-network B, and a receiver determines to accept data in the first sub-network A or the second sub-network B according to network data and network state of the two sub-networks.

Based on the aforementioned in-vehicle network system, another aspect of the present application provides a communication method for the in-vehicle network system, comprising the following steps:
the in-vehicle signal system devices performing communications:
the in-vehicle signal system devices operate simultaneously in the first sub-network A and the second sub-network B, and a receiver determines to accept data in the first sub-network A or the second sub-network B according to network data and network state of the two sub-networks.
the key sub-system devices performing communications:
   the key sub-system device(s) in each carriage sends messages simultaneously in the first sub-network A and the second sub-network B, and a receiver determines to accept data in the first sub-network A or the second sub-network B according to the network data and the network state of the two sub-networks; and
   the ordinary sub-system devices performing communications:
      the ordinary sub-system device(s) in each carriage sends messages in the first sub-network A or the second sub-network B and sends identical messages to the key sub-system device(s) in this carriage; the key sub-system device(s) in this carriage forwards the messages in the second sub-network B or the first sub-network A, as a hot standby of the ordinary sub-system device(s); and, a receiver determines to accept data in the first sub-network A or the second sub-network B according to the network data and the network state of the two sub-networks; or
      the ordinary sub-system device(s) in each carriage sends messages simultaneously in the first sub-network A and the second sub-network B, and a receiver determines to accept data in the first sub-network A or the second sub-network B according to the network data and the network state of the two sub-networks.

Compared with the prior art, the present application has the following advantages and positive effects.
(1) In the in-vehicle network system provided by the present application, the in-vehicle signal system devices, the TCMS devices and other in-vehicle network sub-system devices are incorporated into a same network to realize the integration of the signal network and the TCMS network, so that the number of network switching devices, train cables and cabinets can be decreased, and the complexity and maintenance cost of the in-vehicle network system can be reduced. Meanwhile, due to the centralized and optimized deployment of devices, the fault points of the in-vehicle network system are reduced.
(2) The in-vehicle network system provided by the present application is advantageous to realize data sharing and fault diagnosis of the network devices in terms of the whole train system, and is advantageous to realize service diversification of the train network.
(3) In the in-vehicle network system provided by the present application, the first sub-network A and the second sub-network B independent of each other are used as hot standbys for each other, and the key sub-system devices are used as forwarding points of the ordinary sub-system devices to realize the physical isolation of the first sub-network A and the second sub-network B. That is, the ordinary system devices cannot directly access to sub-network where the ordinary systems devices are not located. Accordingly, the safety and stability of another network where the signal system devices are located is ensured, thus hidden dangers caused by the ordinary sub-systems with a low safety level are avoided, and the risk caused by network integration is reduced.
(4) In the in-vehicle network system provided by the present application, the signal system devices directly access to the first sub-network A and the second sub-network B, the key sub-system devices access to the first sub-network A and the second sub-network B in a dual-homing manner, and the first sub-network A and the second sub-network B are hot standbys for each other. That is, the two sub-networks are redundancies of one another. When one of the sub-networks is faulted, the other sub-network is used for communication. Thus, the normal operations of the in-vehicle network devices are ensured, the communications between devices in the whole vehicle will not be affected, and the reliability of the network is improved.
(5) In the in-vehicle network system provided by the present application, the ordinary sub-system devices can directly access to the first sub-network A and the second sub-network B, and the first sub-network A and the second sub-network B are hot standbys for each other. That is, the two sub-networks are redundancies of one another. When one of the sub-networks is faulted, the other sub-network is used for communication. Thus, the normal operations of the in-vehicle network devices are ensured, the communications between devices in the whole vehicle will not be affected, and the reliability of the network is improved.
(6) In the in-vehicle network system provided by the present application, a unified maintenance management platform is provided for vehicle maintenance personnel, so that the maintenance cost is decreased, the maintenance complexity is reduced and the maintenance efficiency is improved.
(7) In the communication method provided by the present application, by integrating the signal system network and the TCMS network, the number of network switching devices, train cables and cabinets is decreased, and the complexity, manufacturing cost and maintenance cost of the train network are reduced.
(8) In the hot standby mechanism of forwarding the messages from the ordinary sub-system devices by the key sub-system devices of the train provided in the present application, during the integration of the signal system network and the TCMS network, hidden dangers caused by the ordinary sub-systems with a low safety level are avoided, the risk caused by network integration is reduced, and the safety and stability of the network are improved.
(9) In the communication method provided by the present application, the signal system devices, the TCMS devices and other in-vehicle sub-system devices all access to the first sub-network A and the second sub-network B, and the first sub-network A and the second sub-network B are hot standbys for each other. That is, the two sub-networks are redundancies of one another. When one of the sub-networks is faulted, the other sub-network is used for communication. Thus, the normal operations of the in-vehicle network devices are ensured, the communications between devices in the whole vehicle will not be affected, and the reliability of the network is improved.

### BRIEF DESCRIPTION OF THE DRAWINGS

Fig. 1 is a network architecture diagram of the in-vehicle network system according to an embodiment of the present application;
Fig. 2 is a diagram of messages sending modes of a key sub-system device and an ordinary sub-system device according to the embodiment of the present application;
Fig. 3 is a network architecture diagram of the in-vehicle network system network according to another embodiment of the present application;
Fig. 4 is a diagram of messages sending modes of a key sub-system device and an ordinary sub-system device according to another embodiment of the present application;
Fig. 5 is a network architecture diagram of the in-vehicle network system network according to still another embodiment of the present application; and
Fig. 6 is a diagram of messages sending modes of a key sub-system device and an ordinary sub-system device according to still another embodiment of the present application.

### DETAILED DESCRIPTION OF THE PRESENT INVENTION

The present application will be specifically described below by exemplary implementations. However, it should be understood that elements, structures and features in one implementation may be advantageously integrated into other implementations without further recitation.

In addition, in the description of the present application, it is to be noted that the terms "first", "second" and the like are merely for illustrative purpose and are not interpreted as indicating or implying relative importance.

### Embodiment 1

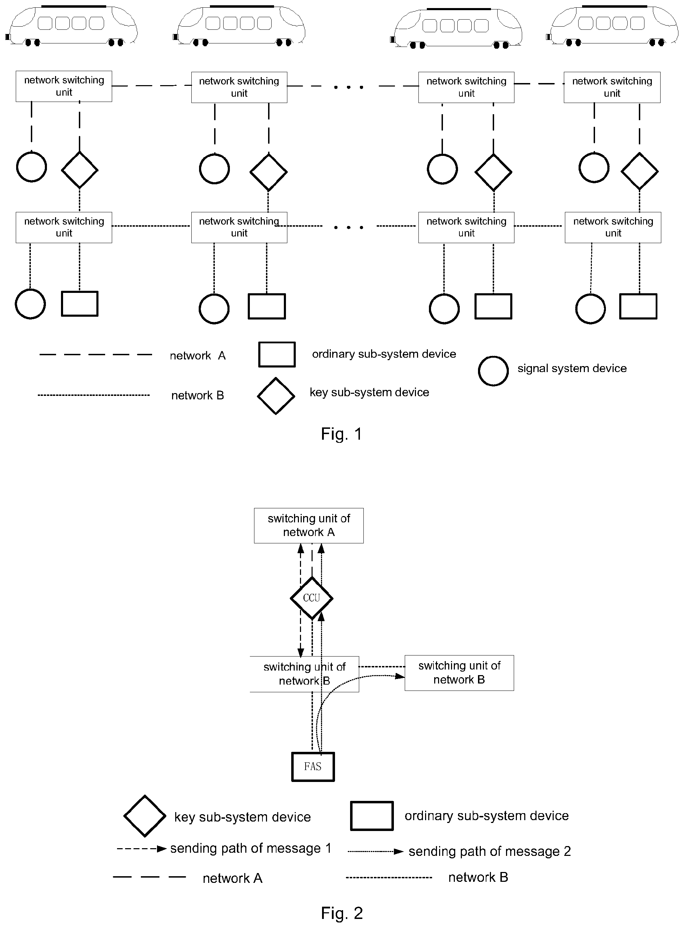

With reference to Fig. 1, an embodiment of the present application provides an in-vehicle network system, comprising in-vehicle signal system devices, TCMS devices, other in-vehicle network sub-system devices and two independent sub-networks, i.e., a first sub-network A and a second sub-network B; the in-vehicle signal system devices directly access to the first sub-network A and the second sub-network B, respectively; according to safety levels, the TCMS devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces, and the ordinary sub-system devices directly access to the second sub-network B.

In this embodiment, other in-vehicle network devices except for the in-vehicle signal system devices are reasonably classified. Those skilled in the art can determine classification of high and low safety levels according to vehicle operation needs. There are different classification standards for different vehicle models and application situations. For example, the classification may be performed according to whether it is related to train operation safety. Devices related to the train operation safety are the key sub-system devices with a high safety level, and devices not related to the train operation safety are the ordinary sub-system devices with a low safety level. In this case, since the TCMS devices are all related to the vehicle operation safety, they are classified into the key sub-system devices. Among other in-vehicle network sub-system devices, devices related to the train operation safety are classified into the key sub-system devices, and devices not related to the train operation safety are classified into the ordinary sub-system devices. After the classification, the in-vehicle network devices from high to low safety levels are successively the in-vehicle signal system devices, the key sub-system devices and the ordinary sub-system devices.

In this embodiment, the in-vehicle signal system network and the TCMS network are integrated into a same network, so that a complexity of the in-vehicle network system is reduced. Meanwhile, due to centralized and optimized deployment of devices, fault points of the system are reduced. In addition, since the first sub-network A and the second sub-network B are hot standby s for each other, it can be ensured that normal operations of the in-vehicle network devices will not be affected when an unrecoverable fault occurs in one of the first sub-network A and the second sub-network B.

It is to be noted that, due to different vehicle models, the configuration mode of the in-vehicle signal system devices, the key sub-system devices and the ordinary sub-system devices in carriages of a train are not fixed. For example, each carriage may be equipped with the three kinds of devices at the same time, or only one or two kinds of the devices. In addition, the number of each kind of the devices equipped is also not fixed. In the drawings of the present application, for convenience of representation, each carriage is equipped with the three kinds of devices, but it should not be interpreted as limitations to the present application.

As a preferred design of the in-vehicle network system, each of the key sub-system devices is a device which has at least two communication interfaces and is related to train operation and vehicle safety, and each of the key sub-system devices accesses to the two sub-networks through the two or more communication interfaces.

In the aforementioned in-vehicle network system, the key sub-system device(s) in each carriage sends messages simultaneously in the first sub-network A and the second sub-network B, and a receiver determines to accept data in the first sub-network A or the second sub-network B according to network data and network state of the two sub-networks. Specifically, the network state is determined according to data arrival time, network stability and other features, so that the first sub-network A or the second sub-network B is selected. The network data contains fields capable of indicating a data source, and thus data from the selected network is acquired according to the network data. The key sub-system devices employ a dual-homing hot standby mechanism. When a network fault occurs in one of the first sub-network A and the second sub-network B, the key sub-system devices will not affected and still accept data in the other sub-network that operates normally, so that a reliability of the network is improved.

As a preferred solution, the key sub-system devices comprise a Central Control Unit (CCU), a Drive Control Unit (DCU), a Remote Input/Output Module (RIOM), a Brake Control Unit (BCU) and an Auxiliary Control Unit (ACU). However, the key sub-system devices are not limited to the above devices, and may further comprise a Human-Machine Interface unit (HMI), a Emergency Recording Module (ERM) and other in-vehicle network devices with a high safety level. Wherein, the Central Control Unit (CCU), the Remote Input/Output Module (RIOM), the Human-Machine Interface unit (HMI) and the Emergency Recording Module (ERM) belong to TCMS devices, and other devices belong to the other in-vehicle network sub-system devices.

As a preferred design of the in-vehicle network system, each of the ordinary sub-system devices is a device which has one communication interface and is not related to train operation and vehicle safety, and each of the ordinary sub-system devices accesses to the second sub-network B through the one communication interface.

The ordinary sub-system device(s) in each carriage sends messages in the second sub-network B and sends identical messages to the key sub-system device(s) in a network of this carriage, and the key sub-system device(s) in this carriage forwards messages in the first sub-network A, as a hot standby of the ordinary sub-system device. When the second sub-network B is normal, data in the second sub-network B is accepted; or otherwise, data from the ordinary sub-system devices forwarded by the key sub-system devices in the first sub-network A is accepted. When a train-level fault occurs in the second sub-network B, the key sub-system devices will not be affected and still accept the data from the first sub-network A. Since the key sub-system devices are used as forwarding points of the ordinary sub-system devices, the ordinary sub-system device(s) sends data to the first sub-network A through forwarding by the key sub-system device(s) in the network of this carriage. The signal system devices will also not be affected and still accept data in the first sub-network A. During the above process, the ordinary sub-system devices will not directly communicate with the first sub-network A, and the key sub-system devices, as the forwarding points of the ordinary sub-system devices, realize a physical isolation of the first sub-network A and the second sub-network B. That is, during the integration of the signal network and the TCMS network, a risk in the signal system devices caused by the ordinary sub-system devices is eliminated. When a dangerous behavior such as a broadcast storm or a virus invasion occurs in the second sub-network B, a normal operation of the first sub-network A where the signal system devices are located can still be ensured. Data exchange between a key sub-system device and an ordinary sub-system device is performed by a network switching unit that connects the key sub-system device and the ordinary sub-system device.

As a preferred solution, the ordinary sub-system devices comprise an Electronic Door Control Unit (EDCU), an Heating Ventilation Air Conditioning (HVAC), a Passenger Information System (PIS), a Fire Alarm System (FAS) and a Lighting Control Unit (LCU). However, the ordinary sub-system devices are not limited to the above devices, and may further comprise a running component detection system, a video monitoring system CCTV, a Battery Management System (BMS) and other in-vehicle network devices with a low safety level.

As a preferred design of the in-vehicle network system, the in-vehicle signal system devices are in-vehicle devices each having at least two communication interfaces, and the in-vehicle signal system devices access to the two sub-networks respectively each through two or more communication interfaces. That is, to ensure the safety level, each of the in-vehicle signal system devices contains at least two communication interfaces and accesses to the first sub-network A or the second sub-network B through the at least two communication interfaces, so that the in-vehicle signal systems in the first sub-network A and the second sub-network B are redundancies of one another.

The in-vehicle signal system devices operate simultaneously in the first sub-network A and the second sub-network B, and the receiver determines to accept data in the first sub-network A or the second sub-network B according to the network data and the network state of the two sub-networks. When a network fault occurs in one of the first sub-network A and the second sub-network B, the signal system devices will not be affected and still accept data in the other sub-network that operates normally, so that the reliability of the network is improved.

As a preferred solution, the in-vehicle signal system devices comprise a Motion Determination Unit (MDU), a Vital Digital Unit (VDU), a Train Access Unit (TAU), an Automatic Train Supervision system (ATS), a Safety Gateway device (SG) and a Communication Management Unit (CMU). However, the in-vehicle signal system devices are not limited to the above devices, and may further comprise a Automatic Train Operation system (ATO), a Vital Operation Process unit (VOP) and other signal system devices.

Further refer to Fig. 1, as a preferred solution of the in-vehicle network system, topologies of the first sub-network A and the second sub-network B are, but not limited to, linear topologies, and may be ring topologies, trapezoidal topologies or the like. In the in-vehicle network system, a proper network topology may be selected according to the train requirements.

With continued reference to Fig. 1, as a preferred solution of the in-vehicle network system, to realize communications between the two sub-networks and the in-vehicle network devices, a plurality of network switching units are arranged in each sub-network, and the in-vehicle network devices are connected to the sub-networks through the network switching units.

### Embodiment 2

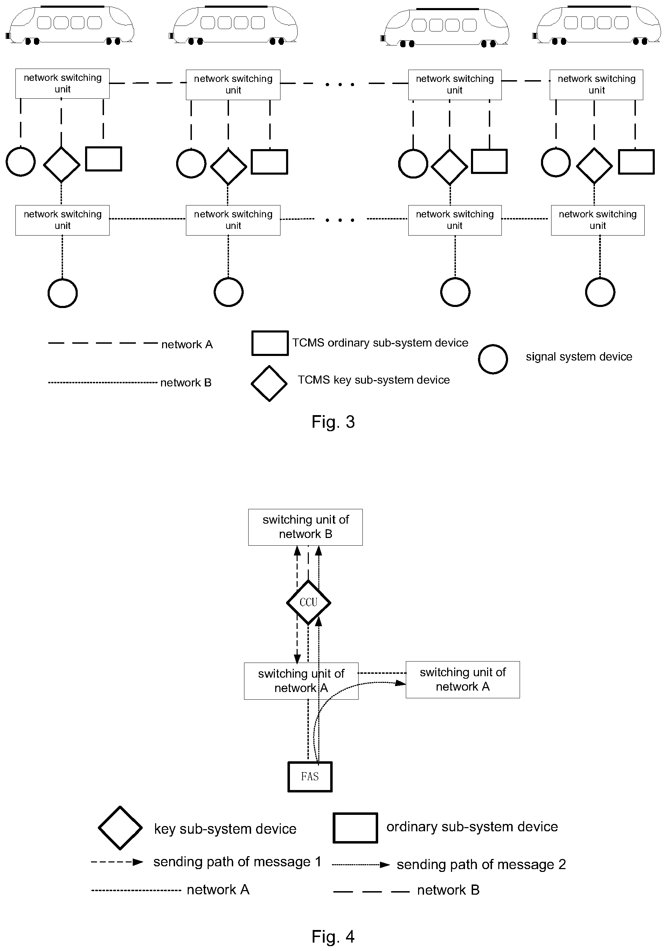

With reference to Fig. 3, another embodiment of the present application provides an in-vehicle network system, comprising in-vehicle signal system devices, TCMS devices, other in-vehicle network sub-system devices and two independent sub-networks, i.e., a first sub-network A and a second sub-network B; the in-vehicle signal system devices directly access to the first sub-network A and the second sub-network B, respectively; according to safety levels, the TCMS devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces, and the ordinary sub-system devices directly access to the first sub-network A. The in-vehicle signal system network and the TCMS network are integrated into a same network, so that a complexity of the in-vehicle network system is reduced. Meanwhile, due to centralized and optimized deployment of devices, fault points of the system are reduced. In addition, since the first sub-network A and the second sub-network B are hot standbys for each other, it can be ensured that normal operations of the in-vehicle network devices will not be affected when an unrecoverable fault occurs in one of the first sub-network A and the second sub-network B.

This embodiment differs from Embodiment 1 in that: the ordinary sub-system device(s) in each carriage sends messages in the first sub-network A and sends identical messages to the key sub-system device(s) in a network of this carriage, and the key sub-system device(s) in this carriage forwards messages in the second sub-network B, as a hot standby of the ordinary sub-system device. When the first sub-network A is normal, data in the first sub-network A is accepted; or otherwise, data from the ordinary sub-system devices forwarded by the key sub-system devices in the second sub-network B is accepted. When a train-level fault occurs in the first sub-network A, the key sub-system devices will not be affected and still accept the data in the second sub-network B. Since the key sub-system devices are used as forwarding points of the ordinary sub-system devices, the ordinary sub-system device(s) sends data to the second sub-network B through forwarding by the key sub-system device(s) in the network of this carriage. The signal system device will also not be affected and still accept data in the second sub-network B. During the above process, the ordinary sub-system devices will not directly communicate with the second sub-network B, and the key sub-system devices, as the forwarding points of the ordinary sub-system devices, realize a physical isolation of the first sub-network A and the second sub-network B. That is, during the integration of the signal network and the TCMS network, a risk in the signal system devices caused by the ordinary sub-system devices is eliminated. When a dangerous behavior such as a broadcast storm or a virus invasion occurs in the first sub-network A, a normal operation of the second sub-network B where the signal system devices are located can still be ensured.

### Embodiment 3

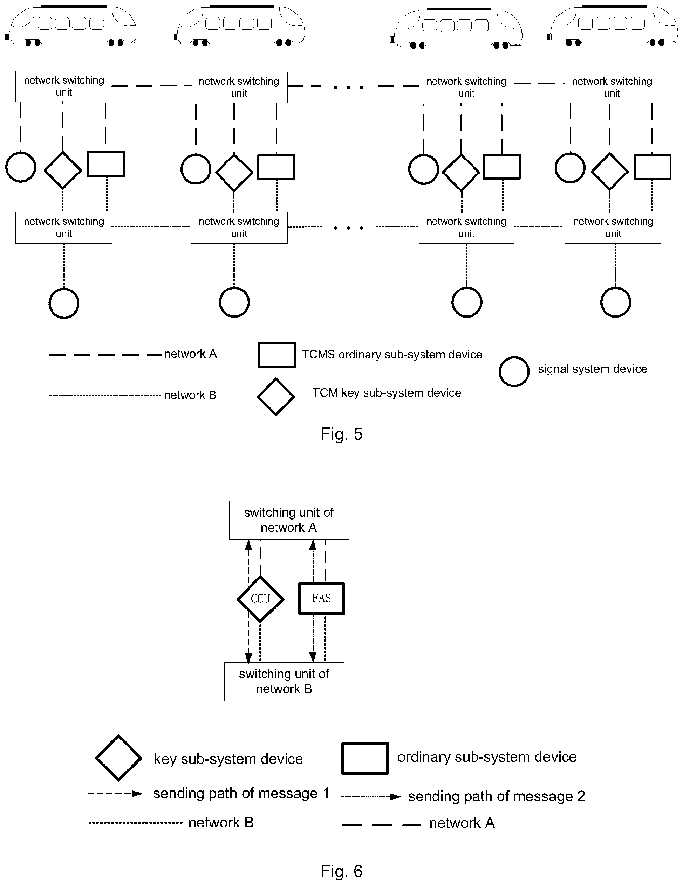

With reference to Fig. 5, still another embodiment of the present application provides an in-vehicle network system, comprising in-vehicle signal system devices, TCMS devices, other in-vehicle network sub-system devices and two independent sub-networks, i.e., a first sub-network A and a second sub-network B; the in-vehicle signal system devices directly access to the first sub-network A and the second sub-network B, respectively; according to safety levels, the TCMS devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces, and the ordinary sub-system devices access to the first sub-network A and the second sub-network B through two or more communication interfaces. The in-vehicle signal system network and the TCMS network are integrated into a same network, so that a complexity of the in-vehicle network system is reduced. Meanwhile, due to centralized and optimized deployment of devices, fault points of the system are reduced. In addition, since the first sub-network A and the second sub-network B are hot standbys for each other, it can be ensured that normal operations of the in-vehicle network devices will not be affected when an unrecoverable fault occurs in one of the first sub-network A and the second sub-network B.

This embodiment differs from the Embodiments 1 and 2 in that: each of the ordinary sub-system devices is a device which has at least two communication interfaces and is not related to train operation and vehicle safety, and each of the ordinary sub-system devices accesses to the first sub-network A and the second sub-network B through two or more communication interfaces.

The ordinary sub-system device(s) in each carriage sends messages simultaneously in the first sub-network A and the second sub-network B, and a receiver determines to accept data in the first sub-network A or the second sub-network B according to network data and network state of the two sub-networks. When a network fault occurs in one of the first sub-network A and the second sub-network B, the ordinary sub-system devices will not be affected and still accept data in the other sub-network that operates normally, so that a reliability of the network is improved.

Based on the in-vehicle network systems provided in Embodiments 1 and 2, an embodiment of the present application provides a communication method for the in-vehicle network system, comprising the following steps:
S1: the in-vehicle signal system devices performing communications
   the in-vehicle signal system devices operate simultaneously in the first sub-network A and the second sub-network B, and a receiver determines to accept data in the first sub-network A or the second sub-network B according to network data and network state of the two sub-networks.
S2: the key sub-system devices performing communications
   the key sub-system device(s) in each carriage sends messages simultaneously in the first sub-network A and the second sub-network B, and the receiver determines to accept data in the first sub-network A or the second sub-network B according to the network data and the network state of the two sub-networks.
S3: the ordinary sub-system devices performing communications
   the ordinary sub-system device(s) in each carriage sends messages in the second sub-network B or the first sub-network A and sends identical messages to the key sub-system device(s) in a network of this carriage; the key sub-system device(s) in this carriage forwards the messages in the first sub-network A or the second sub-network B, as a hot standby of the ordinary sub-system device(s); and, the receiver determines to accept data in the first sub-network A or the second sub-network B according to the network data and the network state of the two sub-networks.

The steps S1, S2 and S3 may be interchanged in order. For example, it is possible that S1: the key sub-system devices performing communications, followed by S2: the ordinary sub-system devices performing communications and S3:the signal system devices performing communications; it is also possible that S1: the key sub-system devices performing communications, followed by S2: the signal system devices performing communications and S3: the ordinary sub-system devices performing communications; and, it is also possible that S1: the ordinary sub-system devices performing communications, followed by S2: the key sub-system devices performing communications and S3: the signal system devices performing communications.

In the communication method provided by the present application, two independent sub-networks are used to integrate the signal network and the TCMS network, and the two sub-networks are hot standbys for each other, so that a reliability of the network is improved. Meanwhile, it is proposed that the key sub-system devices forward messages in the first sub-network A or the second sub-network B, as a hot standby of the ordinary sub-system devices to realize a physical isolation of the two sub-networks, so that the ordinary sub-system devices will not directly communicate with the first sub-network A or the second sub-network B. Accordingly, during the integration of the signal network and the TCMS network, a risk brought to the signal system devices caused by the ordinary sub-system devices is eliminated, and a safety of the network is improved.

Based on the in-vehicle network system provided in Embodiment 3, another embodiment of the present application provides a communication method for the in-vehicle network system, comprising the following steps:
S1: the in-vehicle signal system devices performing communications
   the in-vehicle signal system devices operate simultaneously in the first sub-network A and the second sub-network B, and a receiver determines to accept data in the first sub-network A or the second sub-network B according to network data and network state of the two sub-networks.
S2: the key sub-system devices performing communications
   the key sub-system device(s) in each carriage sends messages simultaneously in the first sub-network A and the second sub-network B, and the receiver determines to accept data in the first sub-network A or the second sub-network B according to network data and network state of the two sub-networks.
S3: the ordinary sub-system devices performing communications
   the ordinary sub-system device(s) in each carriage sends messages simultaneously in the first sub-network A and the second sub-network B, and the receiver determines to accept data in the first sub-network A or the second sub-network B according to the network data and the network state of the two sub-networks.

The steps S1, S2 and S3 may be interchanged in order. For example, it is possible that S1: the key sub-system devices performing communications, followed by S2: the ordinary sub-system devices performing communications and S3: the signal system devices performing communications; it is also possible that S1: the key sub-system devices performing communications, followed by S2: the signal system devices performing communications and S3: the ordinary sub-system devices performing communications; and, it is also possible that S1: the ordinary sub-system devices performing communications, followed by S2: the key sub-system devices performing communications and S3: the signal system devices performing communications.

In the communication method provided by the present application, two independent sub-networks are used to integrate the signal network and the TCMS network, and the two sub-networks are hot standbys for each other, so that a reliability of the network is improved.

The communication method provided by the present application will be further described below by specific embodiments. The description is given by taking a Train Access Unit (TAU) as an example of the in-vehicle signal system device, a Central Control Unit (CCU) as an example of the key sub-system device and a Fire Alarm System (FAS) as an example of the ordinary sub-system device.

Embodiment 4: The first sub-network A is defined as a primary network, and the second sub-network B is defined as an auxiliary network.

TAUs in the first sub-network A and the second sub-network B send messages simultaneously in the respective sub-networks. If the first sub-network A is normal, data in the first sub-network A is accepted; and, if a fault occurs in the first sub-network A, data in the second sub-network B is accepted.

With reference to Fig. 2, the CCU sends a message 1 simultaneously in the first sub-network A and the second sub-network B which are hot standbys for each other. When the first sub-network A is normal, data in the first sub-network A is accepted; and, when a fault occurs in the first sub-network A, data in the second sub-network B is accepted. The FAS sends a message 2 in the second sub-network B and also sends this message to the CCU. In addition to the message 1, the CCU sends the message 2 from the FAS in the first sub-network A, so as to realize a hot standby function for the FAS. When the first sub-network A is normal, the data in the first sub-network A is accepted; and, when a fault occurs in the first sub-network A, the data in the second sub-network B is accepted.

Alternatively, with reference to Fig. 4, the CCU sends a message 1 simultaneously in the first sub-network A and the second sub-network B which are hot standbys for each other. When the first sub-network A is normal, data in the first sub-network A is accepted; and, when a fault occurs in the first sub-network A, data in the second sub-network B is accepted. The FAS sends a message 2 in the first sub-network A and also sends this message to the CCU. In addition to the message 1, the CCU sends the message 2 from the FAS in the second sub-network B, so as to realize a hot standby function for the FAS. When the first sub-network A is normal, the data in the first sub-network A is accepted; and, when a fault occurs in the first sub-network A, the data in the second sub-network B is accepted.

Embodiment 5: The second sub-network B is defined as a primary network, and the first sub-network A is defined as an auxiliary network.

TAUs in the first sub-network A and the second sub-network B send messages simultaneously in the respective sub-networks. If the second sub-network B is normal, data in the second sub-network B is accepted; and, if a fault occurs in the second sub-network B, data in the first sub-network A is accepted.

With continued reference to Fig. 2, the CCU sends a message 1 simultaneously in the first sub-network A and the second sub-network B which are hot standbys for each other. when the second sub-network B is normal, data in the second sub-network B is accepted; and, when a fault occurs in the second sub-network B, data in the first sub-network A is accepted. The FAS sends a message 2 in the second sub-network B and also sends this message to the CCU. In addition to the message 1, the CCU sends the message 2 from the FAS in the first sub-network A, so as to realize a hot standby function for the FAS. when the second sub-network B is normal, the data in the second sub-network B is accepted; and, when a fault occurs in the second sub-network B, the data in the first sub-network A is accepted.

Alternatively, with continued reference to Fig. 4, the CCU sends a message 1 simultaneously in the first sub-network A and the second sub-network B which are hot standbys for each other. when the second sub-network B is normal, data in the second sub-network B is accepted; and, when a fault occurs in the second sub-network B, data in the first sub-network A is accepted. The FAS sends a message 2 in the first sub-network A and also sends this message to the CCU. In addition to the message 1, the CCU sends the message 2 from the FAS in the second sub-network B, so as to realize a hot standby function for the FAS. When the second sub-network B is normal, the data in the second sub-network B is accepted; and, when a fault occurs in the second sub-network B, the data in the first sub-network A is accepted.

Embodiment 6: The first sub-network A and the second sub-network B are used without priority, and the two sub-networks all operate normally.

TAUs in the first sub-network A and the second sub-network B sends messages simultaneously in the respective sub-networks, and a receiver accepts data in the first sub-network A or the second sub-network B according to the network state and network data of the two sub-networks. If the network state and network data of the first sub-network A are superior to those of the second sub-network B, data in the first sub-network A is accepted. Conversely, if the network state and network data of the second sub-network B are superior to those of the first sub-network A, data in the second sub-network B is accepted.

The CCU sends a message 1 simultaneously in the first sub-network A and the second sub-network B which are hot standbys for each other. If the network state and network data of the first sub-network A are superior than those of the second sub-network B, data in the first sub-network A is accepted; conversely, if the network state and network data of the second sub-network B are superior to those of the first sub-network A, data in the second sub-network B is accepted. The FAS sends a message 2 in the second sub-network B and also sends this message to the CCU. In addition to the message 1, the CCU sends the message 2 from the FAS in the first sub-network A so as to realize a hot standby function for the FAS. If the network state and network data of the first sub-network A are superior to those of the second sub-network B, the data in the first sub-network A is accepted; conversely, if the data state and network data of the second sub-network B are superior to those of the first sub-network A, the data in the second sub-network B is accepted.

Alternatively, the CCU sends a message 1 simultaneously in the first sub-network A and the second sub-network B which are hot standbys for each other. If the network state and network data of the first sub-network A are superior than those of the second sub-network B, data in the first sub-network A is accepted; conversely, if the network state and network data of the second sub-network B are superior to those of the first sub-network A, data in the second sub-network B is accepted. The FAS sends a message 2 in the first sub-network A and also sends this message to the CCU. In addition to the message 1, the CCU sends the message 2 from the FAS in the second sub-network B so as to realize a hot standby function for the FAS. If the network state and network data of the first sub-network A are superior to those of the second sub-network B, the data in the first sub-network A is accepted; conversely, if the data state and network data of the second sub-network B are superior to those of the first sub-network A, the data in the second sub-network B is accepted.

Embodiment 7: The first sub-network A is defined as a primary network, and the second sub-network B is defined as an auxiliary network.

TAUs in the first sub-network A and the second sub-network B send messages simultaneously in the respective sub-networks. If the first sub-network A is normal, data in the first sub-network A is accepted; and, if a fault occurs in the first sub-network A, data in the second sub-network B is accepted.

The CCU sends a message simultaneously in the first sub-network A and the second sub-network B which are hot standbys for each other. If the first sub-network A is normal, data in the first sub-network A is accepted; and, if a fault occurs in the first sub-network A, data in the second sub-network B is accepted.

The FAS sends a message simultaneously in the first sub-network A and the second sub-network B. If the first sub-network A is normal, the data in the first sub-network A is accepted; and, if a fault occurs in the first sub-network A, the data in the second sub-network B is accepted.

Embodiment 8: The second sub-network B is defined as a primary network, and the first sub-network A is defined as an auxiliary network.

TAUs in the first sub-network A and the second sub-network B send messages simultaneously in the respective sub-networks. If the second sub-network B is normal, data in the second sub-network B is accepted; and, if a fault occurs in the second sub-network B, data in the first sub-network A is accepted.

The CCU sends a message simultaneously in the first sub-network A and the second sub-network B which are hot standbys for each other. If the second sub-network B is normal, data in the second sub-network B is accepted; and, if a fault occurs in the second sub-network B, data in the first sub-network A is accepted.

The FAS sends a message simultaneously in the first sub-network A and the second sub-network B. If the second sub-network B is normal, the data in the second sub-network B is accepted; and, if a fault occurs in the second sub-network B, the data in the first sub-network A is accepted.

Embodiment 9: The first sub-network A and the second sub-network B are used without priority, and the two sub-networks all operate normally.

TAUs in the first sub-network A and the second sub-network B sends messages simultaneously in the respective sub-networks, and a receiver accepts data in the first sub-network A or the second sub-network B according to the network state and network data of the two sub-networks. If the network state and network data of the first sub-network A are superior to those of the second sub-network B, data in the first sub-network A is accepted. Conversely, if the network state and network data of the second sub-network B are superior to those of the first sub-network A, data in the second sub-network B is accepted.

The CCU sends a message simultaneously in the first sub-network A and the second sub-network B which are hot standbys for each other. A receiver accepts data in the first sub-network A or the second sub-network B according to network state and network data of the two sub-networks. If the network state and network data of the first sub-network A are superior to those of the second sub-network B, data in the first sub-network A is accepted. Conversely, if the network state and network data of the second sub-network B are superior to those of the first sub-network A, data in the second sub-network B is accepted.

The FAS sends a message simultaneously in the first sub-network A and the second sub-network B, and a receiver accepts data in the first sub-network A or the second sub-network B according to network state and network data of the two sub-networks. If the network state and network data of the first sub-network A are superior to those of the second sub-network B, the data in the first sub-network A is accepted. Conversely, if the network state and network data of the second sub-network B are superior to those of the first sub-network A, the data in the second sub-network B is accepted.

The foregoing embodiments are used for explaining the present application and not intended to limit the present application. Any modification and alteration made to the present application without departing from the spirit of the present invention and the protection scope of the claims shall fall into the protection scope of the present application.

## Claims

1. An in-vehicle network system, **characterized in that** comprises in-vehicle signal system devices, Train Control and Management System devices, other in-vehicle network sub-system devices and two independent sub-networks; the in-vehicle signal system devices directly access to a first sub-network A and a second sub-network B, respectively; according to safety levels, the Train Control and Management System devices and the other in-vehicle network sub-system devices are classified into key sub-system devices with a high safety level and ordinary sub-system devices with a low safety level; each of the key sub-system devices accesses to the first sub-network A and the second sub-network B through two or more communication interfaces; and, the ordinary sub-system devices directly access to the first sub-network A and/or the second sub-network B.

2. The in-vehicle network system according to claim 1, **characterized in that** the ordinary sub-system devices directly access to the first sub-network A or the second sub-network B.

3. The in-vehicle network system according to claim 2, **characterized in that** each of the ordinary sub-system devices is a device which has one communication interface and is not related to train operation and vehicle safety, and each of the ordinary sub-system devices accesses to the first sub-network A or the second sub-network B through the one communication interface.

4. The in-vehicle network system according to claim 2 or claim 3, **characterized in that** the ordinary sub-system device(s) in each carriage sends messages in the first sub-network A or the second sub-network B and sends identical messages to the key sub-system device(s) in this carriage; the key sub-system device(s) in this carriage forwards messages in the second sub-network B or the first sub-network A, as a hot standby of the ordinary sub-system device(s); and, a receiver determines to accept data in the first sub-network A or the second sub-network B according to network data and network state of the two sub-networks.

5. The in-vehicle network system according to claim 1, **characterized in that** the ordinary sub-system devices directly access to the first sub-network A and the second sub-network B.

6. The in-vehicle network system according to claim 5, **characterized in that** each of the ordinary sub-system device is a device which has at least two communication interfaces and is not related to train operation and vehicle safety, and each of the ordinary sub-system devices accesses to the first sub-network A and the second sub-network B through two or more communication interfaces.

7. The in-vehicle network system according to claim 5 or claim 6, **characterized in that** the ordinary sub-system device(s) in each carriage sends messages simultaneously in the first sub-network A and the second sub-network B, and a receiver determines to accept data in the first sub-network A or the second sub-network B according to network data and network state of the two sub-networks.

8. The in-vehicle network system according to claim 1, **characterized in that** each of the key sub-system devices is a device which has at least two communication interfaces and is related to train operation and vehicle safety, and each of the key sub-system devices accesses to the two sub-networks through two or more communication interfaces.

9. The in-vehicle network system according to claim 1 or claim 8, **characterized in that** the key sub-system device(s) in each carriage sends messages simultaneously in the first sub-network A and the second sub-network B, and a receiver determines to accept data in the first sub-network A or the second sub-network B according to network data and network state of the two sub-networks.

10. The in-vehicle network system according to claim 1, **characterized in that** the in-vehicle signal system devices are in-vehicle devices each having at least two communication interfaces, and the in-vehicle signal system devices respectively access to the two sub-networks each through two or more communication interfaces.

11. The in-vehicle network system according to claim 1 or claim 10, **characterized in that** the in-vehicle signal system devices operate simultaneously in the first sub-network A and the second sub-network B, and a receiver determines to accept data in the first sub-network A or the second sub-network B according to network data and network state of the two sub-networks.

12. A communication method for the in-vehicle network system according to any one of claims 1-11, **characterized in that** comprises the following steps:
the in-vehicle signal system devices performing communications:
the in-vehicle signal system devices operate simultaneously in the first sub-network A and the second sub-network B, and a receiver determines to accept data in the first sub-network A or the second sub-network B according to network data and network state of the two sub-networks.
the key sub-system devices performing communications:
the key sub-system device(s) in each carriage sends messages simultaneously in the first sub-network A and the second sub-network B, and a receiver determines to accept data in the first sub-network A or the second sub-network B according to the network data and the network state of the two sub-networks; and
the ordinary sub-system devices performing communications:
the ordinary sub-system device(s) in each carriage sends messages in the first sub-network A or the second sub-network B and sends identical messages to the key sub-system device(s) in this carriage; the key sub-system device(s) in this carriage forwards the messages in the second sub-network B or the first sub-network A, as a hot standby of the ordinary sub-system device(s); and, a receiver determines to accept data in the first sub-network A or the second sub-network B according to the network data and the network state of the two sub-networks; or
the ordinary sub-system device(s) in each carriage sends messages simultaneously in the first sub-network A and the second sub-network B, and a receiver determines to accept data in the first sub-network A or the second sub-network B according to the network data and the network state of the two sub-networks.
